# EUROPEAN PATENT APPLICATION

(11) **EP 1 870 445 A1**
(43) Date of publication of application: **26.12.2007**
(21) Application number: 06115822.6
(22) Date of filing: 21.06.2006
(51) Int. Cl.: C11B 13/00

(54) **Process for producing tall oil and use of heating in the production of tall oil**

(71) Applicant: Linde Aktiengesellschaft, 65189 Wiesbaden (DE)
(72) Inventor: Lindström, Curt, 94143, Piteå (SE); Jönsson, Jonas, 90653, Umeå (SE); Naydenov, Valeri, 97344, Luleå (SE); Kjellberg, Nils, 17552, Järfälla (SE); Sellerholm, Per, 11264, Stockholm (SE)
(74) Representative: Hjelt, Pia Dorrit Helene

(57) **Abstract**

The invention relates to a process for the production of tall oil from soap oil and to the use of heating in order to improve the production of tall oil. Soap oil, which has been produced by neutralization of tall oil soap, is acidulated by reacting the soap oil with an acid and freed tall oil is recovered. In the acidulation step, the temperature is raised above 100 °C, preferably over 105 °C, for improving the acidulation of soap oil. The acid is preferably concentrated sulfuric acid.

## Description

### BACKGROUND OF THE INVENTION

The present invention relates to a process for the production of tall oil from soap oil and to the use of heating in order to improve the production of tall oil. According to the invention, soap oil, which has been produced by neutralization of tall oil soap, is acidulated by reacting said soap oil with an acid in order to free the tall oil, and the freed tall oil is recovered. The improvement according the invention relates specifically to heating in the acidulation step. The invention also relates to the use of a heating step above 100 °C for improving the acidulation of soap oil.

Tall oil soap is produced as a byproduct in the digestion of wood chips in the sulfate pulping process. The spent digestion liquor or "black liquor" contains sodium soaps of resin acids and fatty acids (tall oil) as well as some neutral or unsaponifiable components.

Crude tall oil soap is skimmed off the top of concentrated black liquor. The tall oil soap generally has a pH between 10 and 12, usually close to 12 and it still contains about 40 to 50 % black liquor. The separated tall oil soap is traditionally acidulated with sulfuric acid to a pH of about 3 to 4 at which pH the sodium soaps of the tall oil fatty acids are released and can be separated from the aqueous phase. The free tall oil can be used to provide a number of different chemicals for various industrial applications.

The sulfuric acid, which is used in the acidulation, increases the sulfur input and distorts the sulfur balance in a pulp mill. In order to reduce the sulfur input in the tall oil soap acidulation it is known in the art that part of the sulfuric acid can be replaced with other acids or acidically reacting compounds. There is a number of patents relating to such processes.

Thus, for instance US patent 3,901,869 (Westvaco) describes the acidulation of tall oil soap with carbon dioxide and water to a pH of 7 to 8. The resulting soap oil phase is separated from the aqueous bicarbonate brine phase and is then further acidulated with sulfuric acid to free the tall oil.

US Patent 4,495,095 (Union Camp) discloses acidulation of tall oil soaps with carbon dioxide under a pressure at which the carbon dioxide is in a supercritical state.

US Patent 5,286,845 (Union Camp) teaches neutralization of tall oil soap with carbon dioxide under pressure and separation of the resulting soap oil and bicarbonate brine also under pressure. Substantial savings in the use of sulfuric acid for the final acidulation are provided.

WO 95/23837 (Metsäbotnia) discloses a carbon dioxide neutralization of tall oil soap wherein an extra neutralization with sulfuric acid is performed before the separation of the bicarbonate brine and the neutralized soap oil. The final acidulation to free the tall oil is performed with sulfuric acid.

WO 94/11571 (LT-Dynamics Oy) discloses a process for the neutralization of tall oil soap with sodium bisulfite before a final acidulation with sulfuric acid. The neutralization is performed at a temperature of 90 to 150 °C. The pH of the separated soap oil is about 6 to 6.5. The final acidulation of the resulting soap oil is performed with sulfuric acid in a standard manner, typically at 80 °C, to obtain tall oil.

WO 96/34932 (Oy Polargas Ab) discloses a process for improving the water separation in a carbon dioxide neutralization of tall oil soap. After the neutralization but before the cooking with sulfuric acid, the pH is adjusted with an acidically reacting compound such as bisulfite.

WO 98/29524 (AGA) discloses cleaning of the crude tall oil soap with carbon dioxide to remove lignin impurities prior to neutralization with carbon dioxide and/or sulfuric acid.

WO 99/29813 (Oy Polargas Ab) discloses a process wherein tall oil soap is neutralized with carbon dioxide and the resulting soap oil is heated in an intermediate step to 60 to 100 °C in order to release gases before the soap oil is cooked with sulfuric acid to free tall oil.

By the above mentioned prior art use of carbon dioxide, bisulfite or other acidically reacting compound(s) in the pre-treatment of tall oil soap to produce an intermediate neutralized product, i.e. soap oil, the amount of required sulfuric acid for the final acidulation step in the production of tall oil can be reduced as much as 35-40% or more. Thus, this pre-treatment or neutralization step is highly advantageous in reducing the sulfur load in a pulp mill. The prior art so far, has concentrated very much on improving the neutralization step, while the final cooking, i.e. the acidulation with sulfuric acid or other strong acid has been performed according to standard practices well known from such acidulation wherein sulfuric acid alone is used in one step to free the tall oil from the skimmed tall oil soap.

However, it has now been noted that tall oil soap (pH 10-12) and soap oil (pH 6-8) do not have entirely the same properties. This means that tall oil soap and soap oil do not necessarily behave in the same way in the final acidulation. Therefore, the procedures for cooking the substantially neutral soap oil with a strong acid may differ from the procedures used when tall oil is manufactured in one acidulation step from soap. In actual fact, it has been found that the speed of separation of the aqueous phase is slower when the acidulation is performed on soap oil than on soap and that the quality of the tall oil produced from soap oil may have a lower quality than that produced without the initial neutralization step.

There thus exists a need to improve the speed of phase separation in the acidulation of soap oil. There is also a need to improve the quality and the yield of the tall oil recovered in the acidulation of soap oil. There is also a need for improving the control of the acidulation process in a sulfate pulp mill and to improve the tall oil recovery cycle. The over-all need of a mill is typically to reduce the sulfur load in the tall oil recovery cycle by substituting a part of the sulfuric acid with other acids without reducing the speed or the process or the yield and/or quality of the product.

The present invention sets out to solve these and other problems of the prior art and to provide a process for the recovery of valuable tall oil from soap oil at an improved speed and with a good yield.

An object of the invention is thus to improve the acidulation of soap oil.

An object of the invention is also to produce tall oil from soap oil with high separation speed. The speed should preferably be equal to that obtainable with by acidulation of tall oil soap.

Another object is to improve the quality and/or quantity of the tall oil obtained from the soap oil. The quality of the tall oil should preferably be at least equal to that obtainable from a one-step sulfuric acid soap acidulation.

### BRIEF DESCRIPTION OF THE DRAWINGS

Fig. 1 is a schematic model of tall oil soap.
Fig. 2 is a schematic model of soap oil.

### SUMMARY OF THE INVENTION

In connection with the invention, it was surprisingly found that temperature is a key variable in the final acidulation step of the soap oil. An important role is also played by the concentration of the strong acid.

Thus, the invention relates to a process for producing tall oil, wherein soap oil, which has been produced by neutralization of tall oil soap, is acidulated by reacting said soap oil with an acid to free tall oil, and freed tall oil is recovered. According to the invention the reaction between the soap oil and the acid includes a step wherein the soap oil and/or a mixture of the soap oil and acid is heated to a temperature above 100 °C for improving the reaction between oil and acid.

The improved reaction between the oil and acid reduces the over-all reaction time and speeds up the separation. It is believed that the high temperature facilitates the contact between the oil and the acid in the emulsion by physically increasing the exposure of the sodium soaps to the acid. This is, however, only a theory, which should not be considered as limiting the invention.

The temperature to which the soap oil or soap oil/acid mixture is heated is preferably above 102 °C at atmospheric pressure. In case the pressure is above or below atmospheric, the minimum temperature may vary accordingly. The temperature should bring the water in the mixture to boil. At atmospheric pressure, the temperature is preferably between 103 and 110 °C or higher. The best results have been obtained, with a temperature above 105 °C, such as between 105 and 108 °C. It is preferred also that the whole of the acidulation reaction is performed at a temperature above 100 °C.

The soap oil is preferably one which has been produced by neutralizing tall oil soap with carbon dioxide, although other neutralizing compounds may be used either alone or in combination with carbon dioxide. The acidulating acid is preferably sulfuric acid, although other strong acids such as hydrochloric acid, nitric acid, boric acid etc. may be used.

The invention also relates to the use of a heating step in the acidulation of soap oil with an acid to tall oil, which use comprises heating soap oil and/or a mixture of soap oil and acid above 100 °C for increasing the speed of separation in said tall oil acidulation process.

The heating step may also be used for improving the quality and or the quantity of the tall oil product.

### DETAILED DESCRIPTION OF THE INVENTION

In the process according to the invention soap oil is first provided from the tall oil soap. The soap oil may be produced by any of a number of known procedures for producing soap oil, e.g. as described in the above-mentioned prior art documents.

Crude tall oil soap in the black liquor typically has a pH of about 11-12. The tall oil fatty acids and resins are in the sodium salt form i.e. as soaps. The neutralization with an acidically reacting compound, such as carbon dioxide and water, frees fatty acids into the free acid form. The neutralization proceeds according to the following reaction:

RCOONa + CO₂ + H₂O → RCOOH + NaHCO₃

Thus, the reaction proceeds with carbon dioxide and water by forming sodium bicarbonate brine and soap oil. When the pH reaches a value between about pH 8 and 7, the soap oil/bicarbonate brine emulsion "breaks" and the lighter oil phase rises to the top leaving the aqueous bicarbonate brine at the bottom. It is this breaking of the emulsion, which makes it possible to separate the bicarbonate brine from the neutralized soap oil. The pH of the soap oil when neutralized with sulfur dioxide or sodium bisulfite is typically pH 8-6.

After the emulsion has "broken", the oil phase (soap oil) is separated from the aqueous bicarbonate brine. As mentioned above in connection with the prior art, numerous processes have been designed for improving the neutralization and the separation of the soap oil. The soap oil typically contains between 50 and 70 % water, most typically less than 60 %. The soap oil phase may also be washed e.g. with water or by steam stripping to remove excess gas and brine. The soap oil may also be diluted with water. Dilution may be used, for instance to reduce the viscosity of the oil phase.

The recovered soap oil is then acidulated by reacting the soap oil with a strong acid to free the rest of the tall oil.

Tall oil is traditionally manufactured from tall oil soap in a reactor either in a batch type reaction or in a continuous process. A much used reactor for continuous production of tall oil from soap is a so-called hydrodynamic separation reactor or HDS reactor. In the reactor the soap is contacted with the acid and the tall oil is freed. The final reaction takes place at pH 3 to 4 and a temperature of 80 to 100 °C. In a HDS reactor the freed tall oil separates and floats on top through a lamella system for further transportation to storage tanks. The same kind of procedures can be used when producing tall oil from soap oil.

According to the present invention, the acidulation reaction between the soap oil and the acidulating acid includes a step wherein the soap oil and/or a mixture of the soap oil and acid is heated to a temperature above 100 °C for improving the reaction between oil and acid. The temperature of the oil or oil/acid mixture is preferably above 102 °C and more preferably between 103 and 110 °C. For best results the temperature should be above 105 °C and preferably between 105 and 108 °C.

The above-mentioned temperatures are those, which are relevant at atmospheric pressure. In case the pressure is higher or lower than atmospheric, the temperature should be adjusted accordingly so that the water in the mixture boils. Boiling of the water breaks the bubbles and this physically increases the contact between the soap oil and the acid.

The soap oil is preferably heated to a high temperature prior to being contacted with the acid. The addition of a strong acid to the soap oil typically further increases the temperature. The acidulation reaction is preferably performed throughout at a temperature above 100 °C.

The acidulating acid should be a strong acid, which is capable of reducing the pH to the required low pH (pH 3 to 4) for freeing the tall oil. Useful strong acids include mineral acids such as sulfuric acid, sulfurous acid, hydrochloric acid, nitric acid, phosphoric acid, boric acid and the like. Waste acids from other industrial processes, such as ClO₂ generator waste acid, may also be used as a strong acid. The strong acids may also be used in suitable mixtures or sequences.

In the prior art water has typically been added to the soap oil with the strong acid since this is the practice when acidulating tall oil soap in one step with a strong acid. However, in connection with the invention it has surprisingly been found that the strong acid should preferably be a concentrated strong acid. Most preferably the strong acid should be concentrated sulfuric acid. Concentrated sulfuric acid is typically about 96% acid.

The soaps in a traditional tall oil soap or soap oil are typically sodium soaps. The sodium soaps may, if desired, be converted into other soaps such as alkaline earth metal salts prior to the acidulation reaction. Converting the sodium soap into another soap reduces the sodium content of the reaction mixture and this has a beneficial influence on the sodium balance of the mill as well as on the properties of the product.

The main object of the heating according to the present invention is to facilitate the contact between oil and acid. In this way the reaction is speeded up and the reaction time is significantly shortened. Another object of the heating of the present process is to improve the quality of the yield of the acidulation step.

Although heating as such is a conventional feature of the acidulation or cooking of tall oil soap and soap oil to free tall oil, the approach used in the present invention is totally new in the field. Thus, the skilled persons had no idea that heating the soap oil to temperatures above 100 °C and especially above 105 °C would solve the problems relating to the slow reaction and the poor quality encountered in prior art acidulations of soap oil. The inventors surprisingly found that heating of the soap oil and/or a mixture of soap oil and acid above 100 °C to its boiling point increased the speed of separation. It was also surprisingly found that the heating improved the quality of the tall oil produced.

Without wishing to be tied to any specific theory, it is believed that the effect of the heating resides in a better exposing of the three reacting components, soap oil, acid and water to each other.

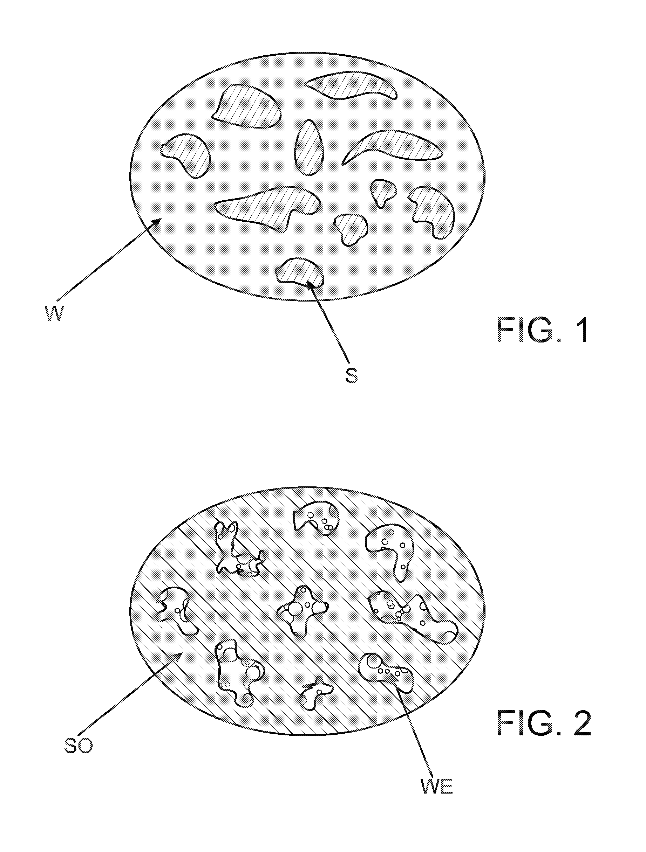

Fig. 1 is a schematic model of tall oil soap showing the water (w) as a continuous phase and the hydrophilic soap (s) as a discontinuous phase. In this reaction medium traditional strong acid and sodium soaps in the water react very fast at about 80 to 100 °C. The separation of the free tall oil is also fast since it separates as an oil phase from the water.

Fig. 2, on the other hand, shows a schematic model of soap oil with the hydrophobic soap oil (so) surrounding a discontinuous phase of water emulsion (we). The soap oil is a water-in-oil (w/o) emulsion. The targeted sodium soaps are inside the water droplets, which in turn are trapped inside the continuous oil phase. The added acidulating acid has difficulties in penetrating to the site of reaction. Furthermore, there seems to exist in the soap oil, between the tall oil and the aqueous phase, a layer of a substance (probably precipitated lignin) that obstructs the transport of oil droplets towards the surface. The inventive heating above the boiling point of the water breaks up the water droplets and makes the sodium soaps much more easily exposed to the acid.

The use of a concentrated acid further improves the reaction. Concentrated sulfuric acid is fat-soluble while diluted sulfuric acid is not. Thus, the use of concentrated sulfuric acid facilitates a fast and complete reaction with a resulting improved quality and quantity of the yield.

In the present specification and claims, the term "tall oil soap" refers to a mixture of saponified fatty acid glycerides/resin acids and black liquor which has been recovered from black liquor in a Kraft pulping process. The pH of the alkaline liquor is typically 10-12 and the soaps are typically sodium salts of said acids. Crude tall oil soap also contains lignin and other impurities deriving from the digestion of the wood.

The term "acidulating" or "cooking" as used herein in connection with the tall oil soap or the soap oil refers to the acidification of the alkaline soap or the substantially neutral soap oil to a pH at about 3 to 4, at which pH the tall oil is freed and separates from the aqueous phase. The term cooking also indicates that the reaction is performed at a high temperature such as at 80 to 100 °C.

The term "neutralization" as used herein refers to a pre-acidification of the alkaline tall oil soap to a substantially neutral pH (pH 6-8.5). The neutralization may be performed with a number of acidically reaction compounds or mixtures or sequences of such compounds. The preferred neutralization is performed with carbon dioxide and water.

The term "soap oil" as used herein refers to an oil phase of neutralized tall oil soap. The soap oil is the oil phase obtained after the neutralization and after separation of the aqueous brine phase. The soap oil typically has a pH between 6 and 8.5. The soap oil may be cleaned and/or heated before being used as a starting material in the acidulation process according to the present invention.

The following example serves to illustrate the invention.

### Example

Laboratory trials were performed at a pulp mill in a reactor normally used for trials concerning bleaching of pulp. Soap oil was added to the reactor. If applicable, water was added to the soap oil (see Table 1). Heating was then turned on while mixing. The reactor was originally designed for pressurized operation but as the tall oil in the example was produced under atmospheric pressure no lid was used. A simple plexiglass shield was used to cover the top of the reactor.

When the soap oil mixture had reached the desired temperature, sulfuric acid was added. The acid and soap oil mixture was set to run in the reactor during a specified time period and at a specified temperature. At the end of the run the mixture was drained and recovered in a beaker and allowed to settle in a heating covert. The volume of separated tall oil was recorded with time, making the speed of tall oil separation the important parameter to measure. The higher the separation speed the better the trial. The total yield of separated tall oil was also recorded.

Test # F was a comparative test reflecting the prior art procedure of a temperature below 100 °C. The temperature in Test # F rose to 97 to 98 °C during the reaction. In Test # 1, a higher temperature was provided due to external heating at about 101 °C. In Test # 4_2 the temperature was further raised by external heating at 106.6 °C. The acid in Test # 4_2 was a diluted acid, and although the yield was significantly improved from the lower-temperature comparative test, the yield was even further improved when using concentrated acid as in Tests # 5 and 6, which show operation according to the preferred embodiment of the invention.

### Analysis:

In the tests (5 and 6), which gave a very good and quick separation, the quality of the tall oil was investigated by measuring the "acid number". The size of this number reveals the amounts of resin and fatty acids in the oil. The higher the number is the better the quality of the tall oil. The acid number was not analyzed in the other tests, which is indicated in Table 2 as "N.A.".

**Table 1. Conditions of the trials; calculated for about 800 g of soap oil**

| | Test # F (comp.) | Test #1 | Test # 4_2 | Test #5 | Test #6 |
|---|---|---|---|---|---|
| Initial temp °C | 92 | 95 | 102.7 | 102.5 | 102.7 |
| Ext heat temp °C | - | 101 | 106.6 | 107 | 108.7 |
| Added H₂O ml | 0 | 215 | 200 | 200 | 0 |
| H₂SO₄ | Dil. 35% | Conc. | Dil.50% | Conc. | Conc. |
| Mixing rpm | 200 | 60 | 60 | 60 | 60 |
| Acid number | N.A. | N.A. | N. A. | 152 | 151 |

**Table 2. Volume of oil (ml) separated from about 800 g soap oil**

| Time (minutes) | Test # F (comp.) | Test #1 | Test #4_2 | Test #5 | Test #6 |
|---|---|---|---|---|---|
| 2 | | 20 | 20 | 320 | 310 |
| 5 | 20 | 50 | 50 | 350 | 340 |
| 10 | 30 | 110 | 120 | 370 | 350 |
| 15 | 60 | 130 | 170 | 370 | 360 |
| 20 | 80 | 140 | 200 | 370 | 360 |
| 25 | 100 | 170 | 210 | 370 | 370 |

### Conclusions:

- The trials show that the number one most important factor is the temperature. This factor is the key for reaching the best separation speeds and yield of good quality tall oil.
- It is important that the temperature reaches a high enough value. The temperature should be above 105 °C at atmospheric pressure for really good results.
- Concentrated acid should be used.
- If the temperature is set right, a reaction time of 10 min is enough.
- When running at the high temperature the result is independent of the water content of the soap oil.

## Claims

1. A process for producing tall oil, wherein soap oil, which has been produced by neutralization of tall oil soap, is acidulated by reacting said soap oil with an acid to free tall oil, and freed tall oil is recovered, **characterized in that** the reaction between said soap oil and said acid includes a step wherein said soap oil and/or a mixture of said soap oil and acid is heated to a temperature above 100 °C for improving the reaction between oil and acid.

2. A process according to claim 1, wherein said temperature is above 102 °C and preferably between 103 and 110 °C or higher, most preferably between 105 and 108 °C at atmospheric pressure.

3. A process according to claim 1 or 2, wherein the acidulation reaction is performed at a temperature above 100 °C.

4. A process according to claim 1 or 2, wherein said soap oil is heated to said temperature prior to said contacting with an acid.

5. A process according to claim 1 or 2, wherein said soap oil has been produced by neutralization to a pH between 6 and 8.5, preferably between 7 and 8 with a neutralizing compound selected from carbon dioxide, sulfur dioxide or bisulfite.

6. A process according to claim 1, wherein said acidulating acid is selected from sulfuric acid, sulfurous acid, hydrochloric acid, nitric acid, phosphoric acid, boric acid, ClO₂ generator waste acid and mixtures thereof.

7. A process according to claim 6, wherein said acid is concentrated sulphuric acid.

8. A process according to claim 1, wherein the sodium salts of said soap oil have been converted to alkaline earth metal salts prior to said acidulation reaction.

9. A process according to claim 1, wherein water is used to wash and/or to dilute the soap oil before said reaction.

10. A process according to claim 1, wherein said heating is performed for facilitating the contact between oil and acid and for shortening the reaction time.

11. A process according to claim 1, wherein said heating is performed for improving the quality and/or the quantity of the yield of said acidulation step.

12. Use of a heating step in the acidulation of soap oil with an acid to tall oil, which comprises heating soap oil and/or a mixture of soap oil and acid above 100 °C for increasing the speed of separation in said tall oil acidulation process.

13. Use according to claim 12, wherein said heating step is used for improving the quality and/or the quantity of the tall oil produced.
